# EUROPÄISCHE PATENTANMELDUNG

(11) **EP 2 120 118 A1**
(43) Veröffentlichungstag der Anmeldung: **18.11.2009**
(21) Anmeldenummer: 08008859.4
(22) Anmeldetag: 13.05.2008
(51) Int. Cl.: G05B 13/00, G05B 19/00

(54) **Verfahren zum Betrieb einer verfahrenstechnischen Anlage**

(71) Anmelder: SIEMENS AKTIENGESELLSCHAFT, 80333 München (DE)
(72) Erfinder: Kling, Gerd, 67454 Hassloch (DE); Pfeiffer, Bernd-Markus, Dr., 76744 Wörth (DE)

(57) **Zusammenfassung**

Es wird ein Verfahren zum Betrieb einer verfahrenstechnischen Anlage (10), die durch ein Steuerungsprogramm (19) auf Basis von Vorgabedaten (20) gesteuert wird, vorgeschlagen, wobei die Vorgabedaten (20) um Energieverbrauchsinformationen (26) ergänzt werden, die Energieverbrauchsinformationen (26) anhand von Daten zum tatsächlichen Energieverbrauch beim Abarbeiten eines auf Vorgabedaten (20) basierenden Prozesses aktualisiert werden und ein erwarteter zukünftiger Energieverbrauch der Anlage (10) anhand einer geplanten Anlagenbelegung und der demnach auszuführenden Prozesse sowie der mit einzelnen Prozessen in den zugrunde liegenden Vorgabedaten (20) assoziierten Energieverbrauchsinformationen (26) geschätzt wird.

## Beschreibung

Die Erfindung betrifft ein Verfahren zum Betrieb einer durch ein Steuerungsprogramm gesteuerten verfahrenstechnischen Anlage. Sie bezieht sich weiter auf eine Vorrichtung zur Durchführung des Verfahrens, nämlich ein Computersystem, insbesondere eine Anlagensteuerung, auf dem ein Computerprogramm mit Programmcodeanweisungen zur Implementierung des Verfahrens geladen ist.

Verfahren der o. g. Art sind an sich bekannt. Bei Verfahren zum Betrieb verfahrenstechnischer Anlagen wird grob unterschieden zwischen Anlagen, in denen kontinuierliche Prozesse, also Prozesse mit einem kontinuierlichen Zustrom von Rohstoffen und einem kontinuierlichen Abfluss von Produkten, und Anlagen in denen so genannte Batch-Prozesse ablaufen, wobei letztere sich durch eine diskontinuierliche Produktion, insbesondere auf Basis von Rezepten auszeichnen und eine vordefinierte Abfolge verschiedener Produktionsschritte umfassen.

Es hat sich gezeigt, dass im Rahmen des Energiemanagements, insbesondere einer Energiebedarfsplanung, sich für derartige Anlagen zunehmend das Bedürfnis einer Vorhersage des Energieverbrauchs in naher Zukunft gibt. Diese Vorhersage wird im Folgenden auch als Last- oder Bedarfsprognose bezeichnet und der Zeitraum "in naher Zukunft" kann sich über grundsätzlich beliebige Zeitabschnitte erstrecken, also z. B. die nächsten Stunden, den nächsten Tag, die nächste Woche, und so weiter.

Genaue Prognosen des Energieverbrauchs verfahrenstechnischer Anlagen oder Prozesse sind nach bestem Wissen der Anmelderin bisher nicht verfügbar. Eine grobe Planung eines Spitzenbedarfs wird in der Planungsphase vor Errichtung der Anlage durchgeführt. Im Umfeld des Betriebs von Kraftwerken soll es Verfahren zur Lastprognose, die auf datengestützten Lernverfahren unter Verwendung z. B. künstlicher neuronaler Netze basieren, geben. Hierbei können allerdings im Gegensatz zu verfahrenstechnischen Prozessen stochastische Schwankungen des Verbraucherverhaltens ausgewertet werden, in denen bestimmte saisonale oder tageszeitbedingte Muster zu finden sind.

Eine Aufgabe der Erfindung besteht entsprechend darin, eine Lastprognose auch für verfahrenstechnische Anlagen oder Prozesse zu ermöglichen. Diese Aufgabe wird mit dem Verfahren mit den Merkmalen des Anspruchs 1 gelöst. Dazu ist bei einem Verfahren zum Betrieb einer verfahrenstechnischen Anlage oder eines durch die Anlage realisierten Prozesses, wobei Anlage und/oder Prozess durch ein Steuerungsprogramm auf Basis von Vorgabedaten gesteuert werden, vorgesehen, dass die Vorgabedaten um Energieverbrauchsinformationen ergänzt werden, dass die Energieverbrauchsinformationen anhand von Daten zum tatsächlichen Energieverbrauch beim Abarbeiten eines auf Vorgabedaten basierenden Prozesses aktualisiert werden und ein erwarteter zukünftiger Energieverbrauch der Anlage anhand zweier Parameter oder Parametergruppen geschätzt wird. Ein erster Parameter oder eine erste Parametergruppe ergibt sich dabei anhand einer geplanten Anlagenbelegung und der demnach auszuführenden Prozesse. Ein zweiter Parameter oder eine zweite Parametergruppe ergibt sich des Weiteren anhand der der mit einzelnen Prozessen in den zugrunde liegenden Vorgabedaten assoziierten Energieverbrauchsinformationen. Der Begriff Vorgabedaten umfasst hier Daten nach Art von Sollwerten, also z. B. Rezeptdaten für Chargenprozesse, die den jeweiligen Prozess bestimmen.

Der Vorteil der Erfindung besteht darin, dass bisher zum Betrieb verfahrenstechnischer Anlagen benötigte Vorgabedaten um Energieverbrauchsinformationen ergänzt werden und auf Basis der bisherigen Daten (Vorgabedaten) und der neu hinzukommenden Daten (Energieverbrauchsinformationen) grundsätzlich alle Informationen zur Verfügung stehen, um einen erwarteten zukünftigen Energieverbrauch der Anlage zu ermitteln. Anhand der Vorgabedaten liegt nämlich eine geplante Anlagenbelegung und die Art und Anzahl der demnach auszuführenden Prozesse fest. Wenn zu jedem ausführbaren Prozess zumindest eine Energieverbrauchsinformation vorliegt, kann durch Addition der Verbrauchsinformationen - wenn einzelne Prozesse mehrfach auszuführen sind, ggf. durch zwischengeschaltete Multiplikation - der erwartete zukünftige Energieverbrauch relativ genau ermittelt werden. Wenn die Energieverbrauchsinformationen anhand von Daten zum tatsächlichen Energieverbrauch beim Abarbeiten eines Prozesses und der davon umfassten Teilprozesse aktualisiert werden, können auch Schwankungen des Energiebedarfs berücksichtigt werden, etwa ein unterschiedlicher Energiebedarf beim Temperieren eines im Winter angelieferten Rohstoffs im Vergleich zum Energiebedarf beim Temperieren desselben Rohstoffs, der im Sommer mit einer deutlich höheren Ausgangstemperatur angeliefert wird. Insoweit ergibt sich letztlich eine relativ genaue Möglichkeit einer Schätzung eines erwarteten zukünftigen Energieverbrauchs der Anlage, die auch jahreszeitbedingte, rohstoffbedingte und sonstige Einflüsse auf den Energiebedarf zumindest näherungsweise zu erfassen vermag.

Bei einer Anlage, die Teilanlagen umfasst, oder bei einer Anlage, bei dem der darauf ausgeführte Prozess Teilprozesse umfasst, ist vorgesehen, dass die Energieverbrauchsinformationen sich als Summe aller Energieverbrauche der vom jeweiligen Prozess umfassten Teilprozesse oder der vom jeweiligen Prozess belegten, von der Anlage umfassten Teilanlagen ergibt. Auf diese Weise ist einerseits eine Berücksichtigung sämtlicher den Energiebedarf bestimmender Energieverbrauchsinformationen und andererseits eine die Genauigkeit der Schätzung erhöhende Granularität der Datenerfassung gewährleistet.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

In einer ersten Ausführungsform der Erfindung ist vorgesehen, dass die Anlage diskontinuierliche Chargenprozesse ausführt und die Vorgabedaten Rezeptdaten sind. Bevorzugt werden dann die Energieverbrauchsinformationen zu vorgegebenen oder vorgebbaren Zeitpunkten, insbesondere äquidistanten Zeitpunkten, erfasst und es erfolgt mathematisch eine Komprimierung einer evtl. Mehrzahl von Energieverbrauchsinformationen für ein und denselben Prozess oder Teilprozess auf genau eine Energieverbrauchsinformation, z. B. durch Mittelwertbildung oder dergleichen.

Bei Anlagen, die diskontinuierliche Chargenprozesse ausführen, gibt es heute in vielen Fällen bereits eine automatische Rezeptsteuerung, die nicht nur die Vorschriften zur Herstellung jedes einzelnen Rezepts beinhaltet, sondern auch eine Chargenplanung, also Informationen darüber, zu welchem Zeitpunkt oder Zeitabschnitt welches Rezept auf welcher Teilanlage abgearbeitet werden soll. Wenn solche Anlagen mit Mitteln zur Erfassung von Energieverbrauchsinformationen ausgestattet werden (z. B. mit dem von der Anmelderin der vorliegenden Erfindung angebotenen Produkt mit der Bezeichnung "PCS7 powerrate"), besteht die Möglichkeit, den jeweils aktuellen Energieverbrauch auf der Ebene sämtlicher Teilanlagen exakt zu erfassen und den produzierten Chargen im Rahmen eines Chargenprotokolls zuzuordnen. In einem Archiv erfasste, tatsächliche Energieverbrauche mehrer Vorgänge zur Produktion desselben Rezepts können gemittelt und schließlich als Energieverbrauchsinformation, z. B. als Parameter "Energiebedarf", im Rezept abgelegt werden. Die Energieverbrauchsinformation wird damit in jedem Rezept ein bloßer zusätzlicher Parameter neben den bisher schon vorgesehenen Parametern für die erforderlichen Mengen der jeweiligen Rohstoffe. Damit kann im Rahmen der Chargenplanung auch eine sehr genaue Lastprognose des Energiebedarfs erstellt werden, indem der Energieverbrauch aller in einem bestimmten Zeitraum geplanten Chargen addiert wird. Für eine noch genauere Prognose des zeitlichen Verlaufs kann eine Folge erfasster Energieverbrauchsinformationen, z. B. als Treppenprofile für in 15-Minuten-Abständen erfasste Mittelwerte, für die einzelnen Chargen gespeichert werden.

Wenn mit der Anlage kontinuierliche Prozesse ausgeführt werden, ist vorgesehen, dass die Energieverbrauchsinformationen zu vorgegebenen oder vorgebbaren Zeitpunkten erfasst werden. Bei derartigen Anlagen besteht das Ziel der Prozessführung im Allgemeinen in einem möglichst konstanten Betrieb. Durch eine Vielzahl von Regelkreisen wird sichergestellt, dass die wesentlichen Prozessparameter so konstant wie möglich bleiben. Solange die Sollwerte dieser Regelkreise konstant sind, ist die beste mögliche Annahme in Bezug auf den Energiebedarf diejenige, dass der Energieverbrauch oder -bedarf in naher Zukunft konstant bleiben wird. Für derartige Anlagen, die an verschiedenen Arbeitspunkten betrieben werden, z. B. um verschiedene Sorten eines Produktes herzustellen, ist vorgesehen, den Energieverbrauch für typische Arbeitspunkte zu erfassen und als Merkmal zu diesem Arbeitspunkt zu speichern. Die vorgegebenen oder vorgebbaren Zeitpunkte für die Erfassung der Energieverbrauchsinformationen ergeben sich dann bevorzugt aus repräsentativen Verbrauchswerten historischer Aufzeichnungen von Energieverbrauchsinformationen. Die Menge erfasster Energieverbrauchsinformationen kann also auf die repräsentativen Verbrauchswerte reduziert werden, die dann sicher erfasst werden, wenn sich aus historischen Aufzeichnungen ein Anhalt zum Zeitpunkt des Auftretens solcher repräsentativer Werte ergibt. Als repräsentative Verbrauchswerte kommen z.B. in einer Folge von über einen bestimmten Zeitraum regelmäßig aufgenommener Verbrauchswerte lokale Extremwerte oder Unstetigkeitsstellen in Betracht. Etwa wenn zwischen einem ersten und einem nachfolgenden Verbrauchswert eine oberhalb eines Schwellwerts liegende Differenz besteht, so dass daran bei einem kontinuierlichen Prozess z. B. ein Arbeitspunktwechsel erkannt werden kann.

Solche Energieverbrauchsinformationen werden zusammen mit der für die jeweilige Produktsorte erforderlichen Kombination von Sollwerten gespeichert. Dadurch kann für einen bevorstehenden Arbeitspunktwechsel auch eine entsprechende Prognose zur Änderung des Energiebedarfs abgegeben werden.

Für zeitlich nacheinander abgearbeitete Prozesse, insbesondere bei diskontinuierlichen Prozessen, kann die Verbrauchsinformation durch Mittelwertbildung zusammengefasst werden, so zufällige Streuungen ausgemittelt werden.

Für alle bisher beschriebenen Aspekte des Verfahrens und seiner Ausgestaltungen gilt, dass die Energieverbrauchsinformationen im Falle einer Mehrzahl von Energieträgern für jeden Energieträger, z. B. Strom, Gas, Heizdampf, Kühlmedium, usw., separat erfasst werden, weil ein aufsummierter Gesamtenergieverbrauch bei Prognosen im allgemeinen nicht relevant ist, sondern eher bei Optimierungsvorhaben. Für eine kaufmännische Nutzung der Prognoseergebnisse ist auch eine Hinzuziehung von aktuell zu haltenden Tarifmodellen für die Energiekosten notwendig.

Das Verfahren und seine Ausgestaltungen werden bevorzugt in Software realisiert. Insoweit betrifft die Erfindung auch ein Computerprogramm mit durch einen Computer ausführbaren Programmcodeanweisungen zur Implementierung des Verfahrens wie hier erläutert und nachfolgend weiter beschrieben. Des Weiteren betrifft die Erfindung auch ein Speichermedium mit einem derartigen Computerprogramm und ein Computersystem, insbesondere eine Anlagensteuerung, also eine zur Steuerung der verfahrenstechnischen Anlage vorgesehene Automatisierungslösung mit einem oder mehreren Automatisierungsgeräten, auf der oder auf denen ein derartiges Computerprogramm geladen ist.

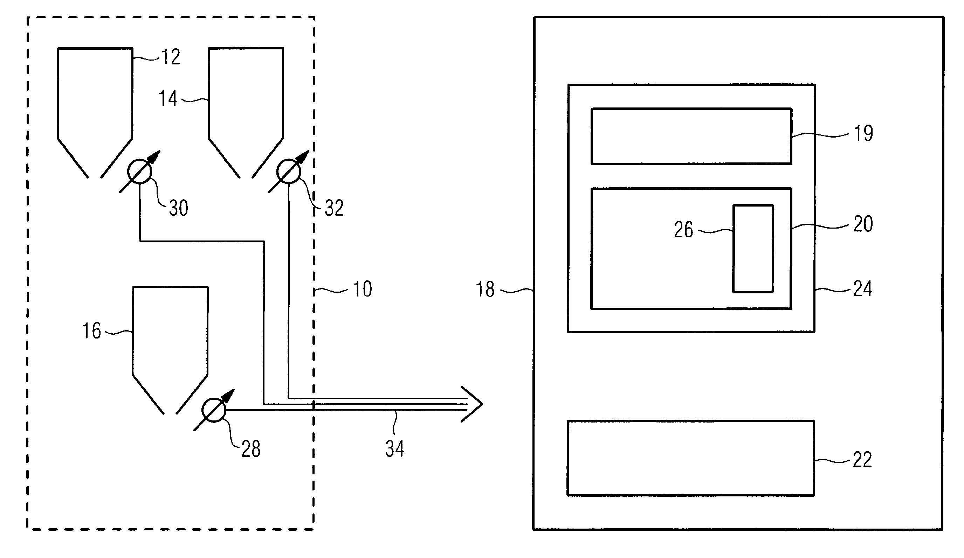

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Darin zeigt die einzige
- Figur: eine schematisch vereinfachte verfahrenstechnische Anlage mit einer zu deren Steuerung vorgesehenen An- lagensteuerung.

Die Figur zeigt schematisch vereinfacht eine verfahrenstechnische Anlage 10, in der ein Prozess zur Herstellung eines Produktes abläuft. Dazu umfasst die Anlage 10 Einrichtungen, wie z. B. Behälter 12, 14 und einen Reaktor 16, wobei in den Behältern 12, 14 Rohstoffe vorgehalten werden, die in dem Reaktor 16 zu einem Produkt kombiniert werden. Tatsächliche Anlagen 10 sind in der Praxis üblicherweise weitaus komplexer. Für das Verständnis der Erfindung kann von einer vereinfachten Anlage 10 wie dargestellt ausgegangen werden.

Die Anlage 10 wird von einer Anlagensteuerung 18 entsprechend einem Steuerungsprogramm 19 als Automatisierungslösung auf Basis von Vorgabedaten 20 gesteuert. Als Beispiel für eine Anlagensteuerung 18 kann von einem Automatisierungsgerät nach Art einer an sich bekannten speicherprogrammierbaren Steuerung oder dergleichen ausgegangen werden. Die Anlagensteuerung 18 umfasst eine Verarbeitungseinheit nach Art eines Prozessors 22 oder dergleichen und das Steuerungsprogramm 19 wie auch die Vorgabedaten 20 werden in einem der Anlagensteuerung 18 zugeordneten Speicher 24 vorgehalten.

Für den Betrieb der Anlage 10 ist vorgesehen, dass die Vorgabedaten 20 um Energieverbrauchsinformationen 26 ergänzt werden. Die Energieverbrauchsinformationen 26 werden anhand von Daten zum tatsächlichen Energieverbrauch beim Abarbeiten eines jeweils auf den Vorgabedaten 20 basierenden Prozesses aktualisiert. Dazu umfasst die Anlage 10 Sensoren 28, 30, 32, die in einer notwendigen Vielzahl z. B. einzelnen Teilelementen der Anlage 10 (Teilanlagen) - im dargestellten Beispiel den Behältern 12, 14 und dem Reaktor 16 - zugeordnet sind. Evtl. Teilanlagen können auch als korrespondierend mit darin ausgeführten Teilprozessen aufgefasst werden, so dass bei einer Mehrzahl von Sensoren 28-32 auch davon gesprochen werden kann, dass jedem Teilprozess oder zumindest relevanten Teilprozessen ein Sensor 28-32 zugeordnet ist.

Die Sensoren 28-32 liefern in an sich bekannter Art Messwerte 34, die mit der Anlagensteuerung 18 in ebenfalls an sich bekannter Art, z. B. über Analogeingänge, aufgenommen werden und insoweit zur weiteren Verarbeitung und zur Ergänzung der Vorgabedaten 20 zur Verfügung stehen.

Mit dem Prozessor 22 und unter Kontrolle des jeweiligen Steuerungsprogramms 19 kann, wie jeweils durch das Steuerungsprogramm 19 vorgesehen, eine Erfassung der Energieverbrauchsinformationen 26, also eine Aufnahme der Messwerte 34, erfolgen, z. B. zu vorgegebenen oder vorgebbaren Zeitpunkten, insbesondere äquidistanten Zeitpunkten, oder zu Zeitpunkten, die sich aus repräsentativen Verbrauchswerten historischer Aufzeichnungen von Energieverbrauchsinformationen 26 ergeben. Eine mathematische Komprimierung einer evtl. Mehrzahl von Energieverbrauchsinformationen 26 oder bereits vor Ergänzung der Vorgabedaten 20 um die Energieverbrauchsinformationen 26 durch Komprimierung einer evtl. Mehrzahl von Messwerten 34 kann ebenfalls durch den Prozessors 22 und entsprechend dem Steuerungsprogramm 19 erfolgen, z. B. durch eine Mittelwertbildung oder dergleichen.

Das Computerprogramm, mit dem das Verfahren wie hier oder weiter oben beschrieben implementiert ist, ist üblicherweise Bestandteil des Steuerungsprogramms 19 und insoweit kommt als Speichermedium mit einem solchen Computerprogramm auch der Speicher 24 der Anlagensteuerung 18 in Betracht, ggf. ist dieser Speicher 24 auch ein steckbarer Speicher nach Art eines Flash-Speichers oder eines NV-RAM. Die Anlagensteuerung 18 selbst ist ein Beispiel für ein Computersystem, auf dem ein Computerprogramm zur Implementierung des Verfahrens geladen sein kann.

Der Vorteil der Erfindung besteht darin, dass durch Kombination einer bekannten Funktionalität, nämlich z. B. Rezeptsteuerung und Chargenplanung, mit einer Funktionalität zur Energieerfassung, z. B. "PCS7 powerrate", eine neuartige Funktionalität erreicht wird. Durch Nutzung von Vorkenntnissen über den Betrieb der jeweiligen Anlage, auf einer obersten Ebene zumindest von Vorkenntnissen über die Unterschiede bei kontinuierlichen und diskontinuierlichen Prozessen, können speziell für verfahrenstechnische Prozesse Prognosen erstellt werden, die eine höhere Genauigkeit erreichen als rein datenbasierte Lernverfahren. Der Realisierungsaufwand für eine damit mögliche Lastprognose ist vergleichsweise gering, wenn die interagierenden Funktionalitäten ohnehin installiert sind.

Für jede Produktion kann der Anwender den zeitlichen Verlauf eines Bedarfs der jeweiligen Energien für jeden Energieträger vorhersehen. Auf dieser Basis wird dann der zukünftige zeitliche Verlauf des Gesamtenergieverbrauchs berechnet. Bei dieser Berechnung können einfache Zusammenhänge zwischen verschiedenen Energieformen berücksichtigt werden, z. B. kann eine Kältemaschine oder ein Drucklustkompressor wieder als Stromverbrauch berücksichtigt werden. Prinzipiell wird ein zeitlicher Verlauf der benötigten Energien wie eine Ressource bei der Produktionsplanung berücksichtigt. Durch die Planung kann der Betrieb maßgeblich den zeitlichen Verlauf des Energiebedarfs beeinflussen. Damit wird es möglich, die Energiekosten bei der Produktionsplanung zu berücksichtigen. Bei einem diskontinuierlichen Chargenprozess ist z. B. eine zeitliche Staffelung der Chargen möglich, um Lastspitzen, z. B. beim Aufheizen, zu vermeiden. Alternativ oder zusätzlich ist eine Synchronisation verschiedener Prozesse möglich, um z. B. die Abwärme eines ersten Prozesses zur Heizung in einem zweiten Prozess zu nutzen. Dies spart sogar doppelt, nämlich Heiz- und Kühlleistung. Bei kontinuierlichen Prozessen sind die Möglichkeiten zwar nicht so vielfältig, aber auch hier kann der Energieverbrauch, z. B. beim Anfahren oder bei Produktumstellungen, in der Planung berücksichtigt werden. Nebenprozesse wie Kühlaggregate oder Kompressoren, bei denen Pufferkapazitäten genutzt werden können, stellen (zeitlich) steuerbare Energieverbraucher dar, die im Rahmen einer prognosebasierten Planung als Freiheitsgrade genutzt werden können. Eine präzise Lastprognose kann dabei helfen, beim Einkauf von Energieträgern, insbesondere Strom, Kosten zu sparen. Wenn z. B. im Rahmen der Chargenplanung Lastspitzen erkannt werden, die überproportionale Kosten verursachen, können diese durch eine Anpassung der Planung vermieden werden. Neben dem Vermeiden von Lastspitzen kann der Betrieb auch seine maximale Bezugsleistung genauer definieren und ggf. den Leistungspreis reduzieren und ein insoweit festgelegtes Band gleichmäßiger nutzen. Besonders interessant ist eine verlässliche Lastprognose für Betreiber solcher verfahrenstechnischer Anlagen, die neben der Anlage selbst auch noch eigene Anlagen zur Stromerzeugung, z. B. durch Nutzung von Abwärme, betreiben.

Damit lässt sich die Erfindung kurz wie folgt darstellen: Es wird ein Verfahren zum Betrieb einer verfahrenstechnischen Anlage 10, die durch ein Steuerungsprogramm 19 auf Basis von Vorgabedaten 20 gesteuert wird, vorgeschlagen, wobei die Vorgabedaten 20 um Energieverbrauchsinformationen 26 ergänzt werden, die Energieverbrauchsinformationen 26 anhand von Daten zum tatsächlichen Energieverbrauch beim Abarbeiten eines auf Vorgabedaten 20 basierenden Prozesses aktualisiert werden und ein erwarteter zukünftiger Energieverbrauch der Anlage 10 anhand einer geplanten Anlagenbelegung und der demnach auszuführenden Prozesse sowie der mit einzelnen Prozessen in den zugrunde liegenden Vorgabedaten 20 assoziierten Energieverbrauchsinformationen 26 geschätzt wird.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnung offenbarte Merkmalskombination zu beanspruchen.

## Patentansprüche

1. Verfahren zum Betrieb einer verfahrenstechnischen Anlage (10), die durch ein Steuerungsprogramm (19) auf Basis von Vorgabedaten (20) gesteuert wird,
wobei die Vorgabedaten (20) um Energieverbrauchsinformationen (26) ergänzt werden,
die Energieverbrauchsinformationen (26) anhand von Daten zum tatsächlichen Energieverbrauch beim Abarbeiten eines auf Vorgabedaten (20) basierenden Prozesses aktualisiert werden und
ein erwarteter zukünftiger Energieverbrauch der Anlage (10) anhand einer geplanten Anlagenbelegung und der demnach auszuführenden Prozesse sowie der mit einzelnen Prozessen in den zugrunde liegenden Vorgabedaten (20) assoziierten Energieverbrauchsinformationen (26) geschätzt wird.

2. Verfahren nach Anspruch 1, wobei die Energieverbrauchsinformationen (26) sich als Summe aller Energieverbrauche der vom jeweiligen Prozess belegten, von der Anlage (10) umfassten Teilanlagen ergibt.

3. Verfahren nach Anspruch 1 oder 2, wobei die Anlage (10) diskontinuierliche Chargenprozesses ausführt und die Vorgabedaten (20) Rezeptdaten sind.

4. Verfahren nach Anspruch 3, wobei die Energieverbrauchsinformationen (26) zu vorgegebenen oder vorgebbaren Zeitpunkten, insbesondere äquidistanten Zeitpunkten, erfasst werden und mathematisch eine Komprimierung einer evtl. Mehrzahl von Energieverbrauchsinformationen (26) für ein und denselben Prozess auf genau eine Energieverbrauchsinformation (26) erfolgt, insbesondere durch Mittelwertbildung.

5. Verfahren nach Anspruch 1 oder 2, wobei die Anlage (10) kontinuierliche Prozesses ausführt und die Energieverbrauchsinformationen (26) zu vorgegebenen oder vorgebbaren Zeitpunkten erfasst werden.

6. Verfahren nach Anspruch 5, wobei sich die vorgegebenen oder vorgebbaren Zeitpunkte aus repräsentativen Verbrauchswerten historischen Aufzeichnungen von Energieverbrauchsinformationen (26) ergeben.

7. Verfahren nach Anspruch 4, 5 oder 6, wobei Energieverbrauchsinformationen (26) für zeitlich nacheinander abgearbeitete Prozesses durch Mittelwertbildung zusammengefasst werden.

8. Verfahren nach einem der vorangehenden Ansprüche, wobei die Energieverbrauchsinformationen (26) im Falle einer Mehrzahl von Energieträgern für jeden Energieträger separat erfasst werden.

9. Computerprogramm mit durch einen Computer ausführbaren Programmcodeanweisungen zur Implementierung des Verfahrens nach einem der Ansprüche 1 bis 8 wenn das Computerprogramm auf einem Computer, insbesondere durch eine Anlagensteuerung, ausgeführt wird.

10. Speichermedium mit einem durch einen Computer ausführbaren Computerprogramm gemäß Anspruch 9.

11. Computersystem, insbesondere Anlagensteuerung (18), auf dem ein Computerprogramm nach Anspruch 10 geladen ist.
